**Europäisches Patentamt**

**European Patent Office**

**Office européen des brevets**

(19)

(11) Numéro de publication : **0 378 023 B1**

(12) **FASCICULE DE BREVET EUROPEEN**

(45) Date de publication du fascicule du brevet :
**18.03.92 Bulletin 92/12**

(51) Int. Cl.$^5$ : **F16F 1/38**

(21) Numéro de dépôt : **89403558.3**

(22) Date de dépôt : **19.12.89**

(54) **Articulation élastique à rigidités radiales différenciées.**

(30) Priorité : **21.12.88 FR 8816917**

(43) Date de publication de la demande :
**18.07.90 Bulletin 90/29**

(45) Mention de la délivrance du brevet :
**18.03.92 Bulletin 92/12**

(84) Etats contractants désignés :
**DE ES GB IT SE**

(56) Documents cités :
**EP-A- 0 226 702**
**FR-A- 2 214 067**
**FR-A- 2 238 867**

(73) Titulaire : **HUTCHINSON**
**2 rue Balzac**
**F-75008 Paris (FR)**

(72) Inventeur : **Domer, Michel**
**La Cour aux Fleurs Pouilly**
**F-60970 Valdampierre (FR)**

(74) Mandataire : **Picard, Jean-Claude Georges et al**
**Cabinet Plasseraud 84, rue d'Amsterdam**
**F-75009 Paris (FR)**

Jouve, 18, rue Saint-Denis, 75001 PARIS

## Description

La présente invention concerne une articulation élastique du type comportant un bloc de matériau élastique adhérisé à deux armatures tubulaires coaxiales au repos et interposé entre elles, pouvant être amenées à pivoter l'une par rapport à l'autre autour de leur axe, ledit bloc de matériau élastique étant alors soumis à un cisaillement en torsion. Dans certaines applications, comme par exemple dans l'industrie automobile, il est parfois nécessaire que le bloc de matériau élastique présente en outre des rigidités en compression inégales selon au moins deux directions radiales différentes, par exemple dans des directions qui peuvent être à la fois perpendiculaires à l'axe des armatures et perpendiculaires entre elles. Pour ce faire, on prévoit que ce bloc subit selon sa périphérie des variations de section. Ces variations de section sont brusques, étant produites par des alvéoles répartis à la périphérie du bloc et qui peuvent le traverser de part en part, ce bloc ayant, dans les zones séparant ces alvéoles, une épaisseur (mesurée dans la direction de l'axe) constante. Le passage entre les sections normales du bloc et les sections réduites est donc on ne peut plus brutal. Une telle construction est connue du FR-A-2 238 867.

Cette solution de continuité a pour conséquence une mauvaise répartition des contraintes de cisaillement en torsion dans le bloc de matériau élastique, et par suite une diminution de l'endurance des pièces.

Un des buts de l'invention est de remédier à cet inconvénient de la technique antérieure, et à cet effet, une articulation élastique du type mentionné au début sera, conformément à la présente invention, essentiellement caractérisée en ce que lesdites variations de section sont progressives, se traduisant ainsi par une épaisseur de matériau élastique -- mesurée dans des directions parallèles audit axe -- progressivement variable entre des crêtes et des creux, sans solution de continuité.

Dans certains cas, une telle articulation peut ainsi se caractériser par des profils ondulatoires de la fibre moyenne développée du bloc de matériau élastique, ces profils étant symétriques l'un de l'autre par rapport au plan transversal médian de l'articulation.

L'articulation peut aussi se caractériser par une complémentarité de formes exacte entre les parties en relief et les parties en creux du matériau élastique, mais cela n'est bien entendu pas obligatoire. Il peut se faire en effet, à titre d'exemple, que les plages angulaires dans lesquelles la résistance à la compression du bloc en direction radiale devra être importante soient plus grandes que les plages angulaires dans lesquelles cette résistance à la compression devra être réduite. Dans un tel cas, bien entendu, il n'y aura pas complémentarité exacte des formes, car les parties pleines du bloc devront avoir une longueur développée plus importante que celle des parties en creux.

Un autre problème posé par ces articulations élastiques réside dans le fait qu'étant soumises à la corrosion, il est souvent impossible de démonter le boulon qui ordinairement traverse l'armature intérieure pour assurer la fixation de l'ensemble entre les ailes d'une chape de support. Il convient donc de prévoir une protection de l'intérieur de l'armature vis-à-vis de la corrosion autre qu'une protection par revêtement électrolytique, qui serait problématique sur un tube long et de petit diamètre.

D'autre part, les constructeurs prévoient souvent, dans ces ailes, des trous de diamètre sensiblement supérieur au diamètre intérieur de l'armature intérieure de l'articulation, ceci pour rendre le montage du boulon plus facile, d'où résulte une réduction de la surface d'appui des extrémités de cette armature intérieure sur les ailes de la chape, et par suite un risque d'écrasement de ces extrémités lors du serrage.

Il convient donc d'augmenter autant que possible la surface d'appui des extrémités de l'armature intérieure sur les ailes de la chape. Pour ce faire, il faut éviter d'augmenter l'épaisseur de cette armature, pour ne pas augmenter son prix de revient par accroissement du poids de matière.

Conformément à une autre disposition de l'invention, ces deux problèmes -- à savoir celui de la corrosion et celui du risque d'écrasement -- sont résolus par le fait que l'alésage de l'armature intérieure porte un revêtement de matériau élastique anticorrosion d'épaisseur suffisante pour reporter le diamètre intérieur de ladite armature au-delà du diamètre des trous de la chape de support entre les ailes de laquelle l'articulation doit être fixée, au moyen d'un boulon ou analogue traversant lesdits trous ainsi que ladite armature intérieure.

D'autres dispositions particulières de l'invention visent à réduire le prix de revient de telles articulations.

Actuellement, les armatures tubulaires sont constituées à partir de tubes roulés, soudés et réétirés, ce qui est relativement coûteux.

Afin de parvenir à des prix de revient plus réduits, et selon une disposition encore conforme à la présente invention, on réalisera lesdites armatures tubulaires en tôle roulée.

De préférence, l'armature intérieure est fermée avant moulage du bloc de matériau élastique, tandis que l'armature extérieure est fermée après moulage, au moment du montage, pour compenser le retrait de moulage et même soumettre ledit bloc de matériau élastique à une précontrainte.

Avant roulage, il sera également avantageux de prévoir dans ladite armature intérieure des trous permettant une communication, lors du moulage, entre le matériau élastique dudit bloc et l'alésage de ladite armature tubulaire intérieure, pour la formation dudit revêtement.

Un mode d'exécution de l'invention va maintenant être décrit à titre d'exemple nullement limitatif, avec référence aux figures du dessin annexé dans lequel :

   – la figure 1 est une vue selon les deux demi-plans de coupe axiale, perpendiculaires l'un à l'autre, I-O et O-I de la figure 2 ;

   – la figure 2 est une vue en coupe transversale selon la ligne II-II de la figure 1 ;

   – la figure 3 est une vue en coupe transversale semblable à celle de la figure 2 mais avant fermeture de l'armature tubulaire extérieure, et avant montage dans l'alésage du support ; et

   – la figure 4 est une vue en coupe développée selon la fibre moyenne du bloc de matériau élastique (selon diamètre $\varnothing 1$).

Sur les différentes figures, les références 1 et 2 désignent respectivement les armatures tubulaires extérieure et intérieure, lesquelles, comme indiqué plus haut, sont réalisées en tôle roulée.

Le bloc de matériau élastique adhérisé entre ces deux armatures est référencé 3 ; il peut s'agir d'élastomère.

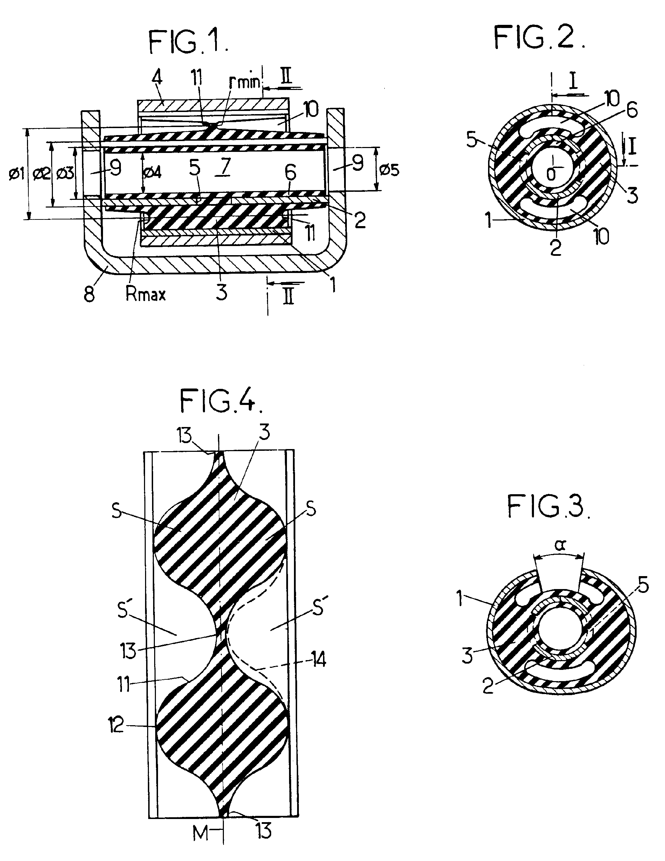

Le moulage de l'élastomère 3 s'effectue dans la configuration de la figure 3, l'armature intérieure 2 étant roulée et fermée et l'armature extérieure 1 roulée et encore ouverte (l'angle d'ouverture $\alpha$ a été exagéré, pour la compréhension). Ainsi, lors du montage à force de l'ensemble dans l'alésage de la pièce de support 4 de l'armature extérieure (figure 1), cette dernière est-elle fermée, jusqu'à jonction de ses extrémités, comme visible sur la figure 2. Cela compense par ailleurs le retrait de moulage de l'élastomère 3, et même le soumet à une précontrainte.

Il est à noter que la partie ouverte $\alpha$ permet en outre un repérage angulaire commode de l'articulation lors du montage, dès lors que les noyaux de moulage sont toujours positionnés de la même manière par rapport à cette partie ouverte. Dans le cas de la figure 3, par exemple, on saura que cette partie ouverte est dans la direction de la plus faible rigidité radiale en compression. Cela évite, très simplement, d'avoir à utiliser les moyens d'indexation angulaire habituels.

Au moulage, et comme indiqué plus haut, l'élastomère constitue le bloc élastique 3 et en même temps s'écoule par des trous 5 que comporte l'armature intérieure 2, pour constituer un revêtement anticorrosion 6 à l'intérieur de cette armature. Le diamètre intérieur $\varnothing 4$ de ce revêtement 6 doit bien entendu être légèrement supérieur au diamètre du boulon grâce auquel l'articulation est montée entre les ailes d'une chape de montage 8, ces ailes étant percées à cet effet de trous alignés 9. Grâce au revêtement anticorrosion 6, on voit que l'on fait en sorte que le diamètre intérieur $\varnothing 3$ de l'armature intérieure 2 soit légèrement supérieur au diamètre $\varnothing 5$ des trous 9 de la chape, le diamètre $\varnothing 4$ du passage 7 prévu pour le boulon (non représenté) restant toutefois légèrement inférieur à ce diamètre $\varnothing 5$. Ainsi, et sans augmenter l'épaisseur du tube intérieur, on fait en sorte que la totalité de la surface des extrémités de l'armature intérieure 2 serve à son appui entre les ailes de la chape 8, ce qui réduit le risque d'écrasement lors du serrage du boulon.

Quant à la forme du bloc d'élastomère 3, les différentes figures la définissent clairement. On voit qu'à chaque extrémité le bloc 3 présente deux gorges 10 en V, qui vont en se rétrécissant vers leur fond. Les profils de ces fonds, référencés 11, ont la forme ondulée qui est visible sur la figure 4. Ces profils sont en principe symétriques l'un de l'autre par rapport au plan transversal médian M de l'articulation. Dans l'exemple représenté, il y a à chaque extrémité du bloc d'élastomère 3 deux crêtes diamétralement opposées 12 et deux creux diamétralement opposés 13, décalés de 90° par rapport aux crêtes. On obtient ainsi des sections d'élastomère S dans l'axe desquelles la rigidité radiale en compression peut être notablement plus élevée (de l'ordre de 4 fois plus) que celle dans l'axe des sections S′.

Sur la figure 4, les sections S et S′ sont égales et de formes complémentaires, mais ceci n'est évidemment pas une obligation. Des rapports de rigidités différents pourraient être obtenus par exemple en augmentant les sections pleines S et en diminuant les sections creuses S′. La ligne en tirets 14 montre quel pourrait être alors le profil du fond des gorges 10.

En revenant à la figure 1, on voit qu'au niveau des crêtes 12 le bloc d'élastomère 3 se raccorde doucement, sans solution de continuité de la section, d'un côté à l'armature intérieure 2, de l'autre côté à l'armature extérieure 1, par l'intermédiaire de bords amincis.

Cette transition progressive s'effectue grâce au rayon de courbure maximal R du fond 11 des gorges 10 à ce niveau. Ce rayon de courbure du fond des gorges 10 va en diminuant progressivement, jusqu'au rayon minimal r, au niveau du fond 13 des creux S′.

## Revendications

1. Articulation élastique à rigidités radiales différenciées, du type comportant un bloc de matériau élastique (3) adhérisé à deux armatures tubulaires (1,2) coaxiales au repos et interposé entre elles, pouvant être amenées à pivoter l'une par rapport à l'autre autour de leur axe, ledit bloc de matériau élastique (3) étant alors soumis à un cisaillement en torsion, ce bloc subissant par ailleurs, selon une surface cylindrique coaxiale à sa surface périphérique et dans le bloc de matériau élastique, des variations de section de sorte à présenter des rigidités en compression inégales selon au moins deux directions radiales différentes, caractérisée en ce que lesdites variations de section sont progressives, se traduisant ainsi par une épaisseur de matériau élastique (3) -- mesurée dans des directions parallèles audit axe -- progressivement variable entre des crêtes (12) et des creux (13), sans solution de continuité.

2. Articulation selon la revendication 1, caractérisée par lesdites variations de section se présentant sous la forme de profils ondulatoires (11) de la fibre moyenne développée du bloc de matériau élastique (3), ces profils étant symétriques l'un de l'autre par rapport au plan transversal médian (M) de l'articulation.

3. Articulation selon la revendication 1 ou 2, caractérisée en ce que, pour éviter les ruptures brusques de section dans un plan de coupe axial, le bloc de matériau élastique (3) comporte en bout, à chaque extrémité, pour sa liaison d'une part à l'armature intérieure (2), d'autre part à l'armature extérieure (1), une gorge périphérique à bords amincis (10) dont le fond (11) a un rayon de courbure, en section, qui va progressivement d'un maximum (R), au niveau desdites crêtes (12) du matériau élastique, à un minimum (r), au niveau desdits creux (13).

4. Articulation selon l'une quelconque des revendications 1 à 3, caractérisée en ce que l'alésage de l'armature intérieure (2) porte un revêtement de matériau élastique anticorrosion (6) d'épaisseur suffisante pour reporter le diamètre intérieur de ladite armature (2) au-delà du diamètre des trous (9) d'une chape de support (8) entre les ailes de laquelle l'articulation doit être fixée, au moyen d'un boulon ou analogue traversant lesdits trous (9) ainsi que ladite armature intérieure (2).

5. Articulation selon l'une quelconque des revendications précédentes, caractérisée en ce que lesdites armatures (1,2) sont réalisées en tôle roulée.

6. Articulation selon la revendication 5, caractérisée en ce que l'armature intérieure (2) est fermée avant moulage du bloc de matériau élastique (3), tandis que l'armature extérieure (1) est fermée après moulage, au moment du montage, pour compenser le retrait de moulage et soumettre ledit bloc de matériau élastique (3) à une précontrainte.

7. Articulation selon la revendication 4, caractérisée en ce que ladite armature intérieure (2) comporte des trous (5) permettant une communication, lors du moulage, entre le matériau élastique dudit bloc (3) et l'alésage de ladite armature tubulaire intérieure (2), pour la formation dudit revêtement (6).

**Patentansprüche**

1. Elastisches Gelenk mit unterschiedlicher Steifigkeit in radialen Richtungen, das aus einem Block (3) aus elastischem Material besteht, der mit zwei rohrförmigen, im Ruhezustand koaxial zueinander verlaufenden Werkstücken verbunden und zwischen diesen angeordnet ist, wobei die rohrförmigen Werkstücke so beaufschlagt werden können, daß sie sich um ihre Achse zueinander drehen und der Block (3) aus elastischem Material dann einer Scherbeanspruchung durch Torsion unterworfen ist und außerdem entlang einer zylindrischen Oberfläche, die koaxial zur Umfangsfläche und innerhalb des Blockes aus elastischem Material liegt, Änderungen des Querschnittes unterliegt, derart, daß unterschiedliche Drucksteifigkeiten in wenigstens zwei verschiedenen radialen Richtungen auftreten, dadurch gekennzeichnet, daß die Änderungen des Querschnitts progressiv sind und somit - gemessen in parallel zur Achse verlaufenden Richtungen - durch eine zwischen Kämmen (12) und Vertiefungen (13) ohne Unterbrechung progressiv veränderliche Stärke des elastischen Materials (3) zum Ausdruck kommen.

2. Gelenk nach Anspruch 1, dadurch gekennzeichnet, daß die Änderungen des Querschnittes in Form von wellenförmigen Profilen (11) der mittleren abgewickelten Faser des Blockes (3) aus elastischem Material auftreten, wobei die Profile zueinander symmetrisch in bezug auf die mittlere Querschnittsebene (M) des Gelenkes sind.

3. Gelenk nach den Ansprüchen 1 oder 2, dadurch gekennzeichnet, daß zur Vermeidung von plötzlichen Querschnittsrissen in einer axialen Schnittebene der Block (3) aus elastischem Material an jedem Ende zur Verbindung einerseits mit dem inneren rohrförmigen Werkstück (2) und andererseits mit dem äußeren rohrförmigen Werkstück (1) eine Umfangskehle (10) mit sich verjüngenden Rändern hat, deren Boden (11) im Querschnitt gesehen, einen Bogenradius hat, der sich progressiv von einem Maximum (R) in Höhe der Kämme (12) des elastischen Materials bis zu einem Minimum (r) in Höhe der Vertiefungen (13) ändert.

4. Gelenk nach einem der vorhergehenden Ansprüche 1 bis 3, dadurch gekennzeichnet, daß die Bohrung des inneren rohrförmigen Werkstücks (2) eine Beschichtung aus elastischem, korrosionsbeständigem Material (6) mit einer Stärke aufweist, die ausreicht, um den inneren Durchmesser des Werkstücks (2) größer wählen zu können als den Durchmesser von Löchern (9), die in einem Stützbügel (8) angebracht sind, zwischen dessen Schenkeln das Gelenk mittels eines Zapfens oder dergleichen, der die Löcher (9) ebenso wie das innere Werkstück (2) durchquert, befestigt werden soll.

5. Gelenk nach einem der vorhergehenden Ansprüche, dadurch gekennzeichnet, daß die Werkstücke (1, 2) aus Walzblech bestehen.

6. Gelenk nach Anspruch 5, dadurch gekennzeichnet, daß das innere Werkstück (2) geschlossen ist bevor der Block (3) aus elastischem Material geformt wird, während das äußere Werkstück (1) nach der Formung im Augenblick der Montage geschlossen wird, um die Formungsschrumpfung zu kompensieren und dem Block (3) aus elastischem Material eine Vorspannung zu geben.

7. Gelenk nach Anspruch 4, dadurch gekennzeichnet, daß das innere Werkstück (2) mit Löchern (5) versehen ist, die während der Formung eine Verbindung zwischen dem elastischen Material des Blockes (3) und der Bohrung in dem rohrförmigen Werkstück (2) zum Bilden der Beschichtung (6) ermöglichen.

**Claims**

1. A resilient joint with different radial stiffnesses, of the type comprising a block of resilient material (3) bonded between two tubular frames (1, 2) which are coaxial at rest and may be caused to pivot with respect to each other about their axis, said resilient material block (3) being then subjected to a shearing action under twisting, this block being moreover subjected, along a cylindrical surface coaxial to its peripheral surface and inside the block of elastic material, to variations of section so as to present unequal stiffnesses under compression in at least two different radial directions, characterized in that said variations of section are progressive, thus resulting in a thickness of resilient material (3) - measured in directions parallel to said axis - which varies progressively between ridges (12) and hollows (13), without interruption of continuity.

2. Joint according to claim 1, characterized in that said variations of section present the shape of undulating profiles (11) of the developed axis of the resilient material block (3), these profiles being symmetrical with each other with respect to the median transverse plane (M) of the joint.

3. Joint according to claim 1 or 2, characterized in that, in view of avoiding steep ruptures of section in an axial section plane, the block of elastic material (3) comprises at the end, at each extremity, for the linkage on the one hand to the inside frame (2), on the other hand to the outside frame (1), a peripheral groove with narrowed edges (10), whose bottom (11) has a radius of curvature, in section, which goes progressively from a maximum (R), at the level of said ridges (12) of the elastic material, to a minimum (r) at the level of said hollows (13).

4. Joint according to one of claims 1 to 3, characterized in that the bore of the inner frame (2) has a coating of anti-corrosion resilient material (6) of sufficient thickness to bring the inner diameter of said frame (2) beyond the diameter of the holes (9) in a supporting fork (8) between the flanges of which the joint is to be fixed, by means of bolt or similar passing through said holes (9) and said inner frame (2).

5. Joint according to any one of the preceding claims, characterized in that said tubular frames (1, 2) are made from rolled metal sheet.

6. Joint according to claim 5, characterized in that the inner frame (2) is closed before moulding of the resilient material block (3) whereas the outer frame is closed after moulding, at the time of assembly, so as to compensate for moulding shrinkage and even to subject said resilient material block (3) to prestressing.

7. Joint according to claim 4, characterized in that there are provided in said inner frame (2) holes (5) providing communication, at the time of moulding, between the resilient material of said block (3) and the bore of said inner tubular frame (2), for forming said coating (6).

# FIG.1.

# FIG.2.

# FIG.4.

# FIG.3.